# EUROPÄISCHE PATENTANMELDUNG

(11) **EP 0 591 703 A2**
(43) Veröffentlichungstag der Anmeldung: **13.04.1994**
(21) Anmeldenummer: 93114576.7
(22) Anmeldetag: 10.09.1993
(51) Int. Cl.: F02C 3/28, F02C 6/18

(54) **Verfahren zur Verstromung von Kunststoffabfällen**

(30) Priorität: 23.09.1992 DE 4231771
(71) Anmelder: BAYER AG, 51368 Leverkusen (DE)
(72) Erfinder: Dummersdorf, Hans-Ulrich, Dr., D-51381 Leverkusen (DE); Waldmann, Helmut, Dr., D-51373 Leverkusen (DE)

(57) **Zusammenfassung**

Die Kunststoff-Abfälle werden in einem Plasmareaktor 3 bei reduzierenden Bedingungen in einem unterstöchiometrisch sauerstoffenthaltenden Plasma bei Temperaturen oberhalb von 1200°C zu einem aus niedermolekularen Kohlenstoff-Fragmenten bestehenden Plasmapyrolysegas umgesetzt, das anschließend auf Temperaturen unterhalb 1500°C abgekühlt wird. Das abgekühlte Plasmapyrolysegas wird dann in komprimierter Form als Brennstoff mit hohem Heizwert und hoher Temperatur einer Gasturbine 10 zur Stromerzeugung zugeführt. Die Abwärme dieser Gasturbine wird zur Erzeugung von Dampf ausgenutzt, der in eine ebenfalls stromerzeugende Dampfturbine 12 eingespeist wird. Das Verfahren eignet sich für Kunststoffabfälle beliebiger Zusammensetzung und führt zu einer vollständigen Umsetzung in ein heizwertreiches Gas, so daß ein hoher exergetischer Wirkungsgrad erzielt wird.

## Beschreibung

Die Verwertung von Kunststoffen ist eine gemeinnützige Aufgabe von hoher gesellschaftlicher Bedeutung. Die Erfindung betrifft ein Verfahren zur maximalen Verstromung von Kunststoffabfällen und damit gleichzeitig zur vollständigen, umweltgerechten Entsorgung von unsortierten, ungereinigten Mischkunststoffabfällen. Sie verfolgt den Zweck, anstelle einer Entsorgung auf Deponien, die nur in begrenztem Maße möglich ist, bzw. einer Verbrennung, Kunststoffabfallgemische beliebiger Herkunft, d.h. in einem solchen Zustand, wie sie bei der Erfassung anfallen, zusätzlich in maximalem Umfang so zu nutzen, daß eine Einsparung von Primärenergieträgern (wie Gas, Öl und Kohle) erreicht wird, so daß quasi ein stoffliches Recycling, d.h. Verfügbarmachung von Kohlenwasserstoffsubstanzen, erreicht wird.

Für das stoffliche Recycling von Polymeren bzw. Polymerabprodukten sind eine ganze Reihe von Verfahren bekannt, die in unterschiedlichem Maße die stoffliche Zusammensetzung des Abfallkunststoffes berücksichtigen müssen.

Dabei ist die stoffliche Verwertung nur in begrenztem Maße möglich. Es ist zu unterscheiden zwischen physikalisch-thermischen, chemisch-thermischen und chemischen Recyclingverfahren.

Die Gruppe der physikalisch-thermischen Verfahren umfaßt ein Aufschmelzen und neues Umformen der Kunststoffabfälle. Die DE-PS 36 03 009 beschreibt ein solches Verfahren. Diese Verfahren besitzen in der Regel folgende Nachteile:
- Die Polymerabfälle müssen gereinigt und sortenrein vorliegen; dies ist in der Praxis jedoch nie der Fall.
- Polymere altern mehr oder weniger stark, so daß ihre Qualitätseigenschaften nach solchen Recyclingprozessen stark nachlassen und sie für viele Anwendungen nicht mehr einsetzbar sind.
- Polymere können physikalisch-thermische Recyclingprozesse nur in einer beschränkten Anzahl von Zyklen durchlaufen, d.h. eine notwendige Endentsorgung wird dadurch letzlich nicht verhindert.

Als Endentsorgung wird gegenwärtig auch noch die Deponierung betrieben, wobei künftig die Verbrennung favorisiert sein wird.

Die Kunststoffverbrennung als derzeit vielfach favorisierte Endlösungsvariante besitzt folgende Nachteile:
- Als Folge der Anwesenheit von Chlor (PVC) muß stets mit Dioxinbildung bei der Verbrennung gerechnet werden. Gleichzeitig entsteht bei der Verbrennung mit hohen Flammentemperaturen NOx; die nachträgliche Rauchgasreinigung ist sehr kostenaufwendig;
- es erfolgt, mit Ausnahme der Dampfproduktion auf niedrigem Druckniveau, keinerlei Nutzung der Kunststoffabfälle, sondern es handelt sich um eine bloße Entsorgung.

Weitere Möglichkeiten der Entsorgung von Kunststoffmüll bestünden in der Wirbelschichtvergasung. Diese Variante würde zwar eine energetische Nutzung des Kunststoffmülls ermöglichen, hat aber folgende Nachteile:
- Infolge des hohen Vernetzungsgrades von Polymeren ist die chemische Reaktivität der Kunststoffe in der Vergasung unter konventionellen Verfahrensbedingungen gering;
- die Wärmetransportprozesse im Teilchen stellen bei den gefahrenen Temperaturen ein Problem dar;
- das Anschmelzen der in den Vergasungsreaktor eingebrachten Thermoplaste führt zu möglichen Störungen des Wirbelbettes;
- die Kunststoffe werden in der Vergasung lediglich in Schwachgas mit niedrigem Heizwert umgesetzt;
- die Entstehung gefährlicher Chlororganika ist durch die Verwendung von Sauerstoff stets gegeben.

Im wesentlichen gleiche Sachverhalte gelten für neuere in die Diskussion gebrachte Vergasungsverfahren (Bandermann, K., "Abfälle im Sauerstoffstrom", VDI-Nachrichten Nr. 6, 7. Febr. 1992, S. 28; Menges G. und Fischer R. "Kohlenstoffrecycling beim Aufarbeiten gemischter Kunststoffabfälle", Kunststoffe 81 (1991)).

Neben der Kunststoffvergasung existieren eine ganze Reihe von Pyrolyseverfahren (s. z.B. DE 33 23 161 und DE 35 31 514), die im niederen bis mittleren Temperaturbereich arbeiten (400 bis 900°C). Diese Verfahren liefern aus der Pyrolysestufe gasförmige Pyrolyseprodukte und Öle, welche in der Regel in einer zweiten Hochtemperaturverbrennungsstufe verbrannt werden. Dabei ist eine begrenzte energetische Nutzung der Gase und Öle möglich. In der Pyrolysestufe entstehen jedoch in erheblichem Maße chlorierte Kohlenwasserstoffe (insbesondere auch chlorierte Aromaten), die ein Gefährdungspotential hinsichtlich der Dioxin- und Furanbildung in der nachfolgenden Verbrennung darstellen.

Allen dargestellten Verfahrensvarianten ist gemeinsam, daß die entsorgten Kunststoffe nicht ausreichend oder nur unter schlechten Wirkungsgraden energetisch genutzt werden können, obwohl ihr Energieinhalt wesentlich höher als der von Braunkohle oder Steinkohle ist. Eine partielle stoffliche Nutzung ist nur in Ausnahmefällen möglich. Die bei den üblichen Verfahren entstehenden Produkte sind in der Regel schwer am Markt unterzubringen, jedoch besitzt der Markt eine nahezu unbegrenzte Aufnahmefähigkeit für Strom.

Damit stellt sich die Aufgabe, ein Verfahren zu entwickeln, mit welchem der hohe Energieinhalt gemischten Kunststoffmülls beliebiger Zusammensetzung mit maximalem Wirkungsgrad in die Edelenergie Strom überführt werden kann und der Kunststoffmüll gleichzeitig vollständig, umweltgerecht und ohne Bildung von Schadstoffen entsorgt werden kann. Gleichzeitig sollte spezifisch ein möglichst hoher Anteil an fossilen Rohstoffen eingespart werden können, um Rohstoffressourcen und Umwelt zu schonen.

Die Lösung der Aufgabe wird erfindungsgemäß durch die Kopplung eines Plasmapyrolyseprozesses mit einem kombinierten Gas-/Dampfturbinenprozeß erreicht, wodurch beide Prozesse gemeinsam in ihrer Verknüpfung ein hocheffektives "Kunststoffkraftwerk" darstellen.

Der Plasmapyrolyseprozeß, der unter reduzierenden Bedingungen und bei Temperaturen oberhalb von 1200°C durchgeführt wird, dient dazu, den hohen Energieinhalt (Heizwert) des Kunststoffmülls, der auf niedrigem exergetischen Niveau vorliegt (oder genutzt werden kann), durch Einkopplung einer Energie mit hoher Exergie (Strom) durch einen Quasiwärmetransformationsprozeß auf ein höheres exergetisches Niveau zu heben, auf welchem dann der gesamte hohe Heizwert des Kunststoffabfalls durch Verstromung im erfindungsgemäß angekoppelten Gas- und Dampfturbinenprozeß sehr effizient (auf hohem exergetischen Niveau) genutzt werden kann. Gleichzeitig wird infolge der hohen Reaktivität des Plasmas eine zeitkohärente und vollständige Umsetzung beliebiger Kunststoffanteile in ultrakurzen Reaktionszeiten erreicht.

Gemäß einer bevorzugten Ausführung schließt das erfindungsgemäße Verfahren bei der Umsetzung in die Praxis folgende Verfahrensstufen ein:
- Pyrolysieren (bzw. Vergasen) des Kunststoffmülls in einem Plasmareaktor bei Temperaturen oberhalb von 1200°C unter reduzierenden Bedingungen und bei Sauerstoffanwesenheit unter unterstöchiometrischen Bedingungen;
- Abkühlung des Plasmas durch Quenchung und indirekte Wärmeübertragung unter Erzeugung von Dampf;
- Abkühlung und Reinigung des Plasmapyrolysegases von Schwermetallen, Säurespuren (wie z.B. H₂S, HCl, HF und HCN);
- Verdichtung des Plasmapyrolysegases auf einen Druck >10 bar;
- Aufheizung des Plasmapyrolysegases auf eine Temperatur nahe der Temperatur des Plasmapyrolysegases vor seiner Reinigung;
- Verbrennung des wieder aufgeheizten Plasmapyrolysegases in der Gasturbine unter Erzeugung von Strom mit hohem exergetischen Wirkungsgrad;
- Zuleitung der Abgase der Gasturbine in einen Kessel unter Erzeugung von Dampf;
- Abarbeitung des exergetischen Dampfpotentials in einer nachgeschalteten Dampfturbine zur Stromerzeugung.

Die Durchführung der Plasmapyrolyse des Kunststoffmülls unter unterstöchiometrischen Bedingungen soll im Sinne der vorliegenden Erfindung so definiert werden, daß im Gesamtsystem stets ein C/O₂-Verhältnis von <1 realisiert wird, Praktisch kann dies mittels der Überwachung der CO₂-Konzentration des Plasmapyrolysegases geschehen (unter Einbeziehung einer Regelung der Sauerstoffzufuhr in den Plasmareaktor).

Eine vorteilhafte Modifikation des erfindungsgemäßen Verfahrens besteht in der Einbindung eines MHD-Generators zwischen Plasmareaktor und Quenchung, wobei die Stromausbeute und damit die Nutzung des Exergieinhaltes des Plasmas wesentlich erhöht wird. Das teilweise ionisierte Plasmapyrolysegas befindet sich unmittelbar hinter dem Plasmareaktor auf höchstem exergetischem Niveau, d.h. mit Temperaturen von bis zu 3500°C, was einen hohen Carnotfaktor bewirkt. Der Stand der Technik bei der Entwicklung von MHD-Generatoren, die sämtlich die Plasmaerzeugung auf oxidativem Wege (Verbrennung eines Brennstoffes mit Sauerstoff) vornehmen, findet sich bei Chapman, Johanson, "MHD-Generators in Power Production", Mechanical Engineering, 9/91, S. 64-68. Der Vorteil der erfindungsgemäßen Variante besteht darin, daß das ionisierte Plasma mit wesentlich höheren Temperaturen in den MHD-Generator eintritt, als das von den konventionellen Verbrennungsprozessen her bekannt ist. Damit erhöht sich die Stromausbeute. Der zweite Vorteil besteht darin, daß das Plasmapyrolysegas für den Einsatz im MHD-Generator nicht verbrannt werden muß, sondern die Verbrennungsenthalpie noch für die nachgeschaltete Gasturbine genutzt werden kann und damit Gesamt-Verstromungswirkungsgrade bis 0,7 oder 0,8 möglich erscheinen. Für die Auskleidung thermisch und chemisch derart hochbelasteter Anlagenteile empfiehlt sich die Verwendung von Graphit.

Es besteht ebenfalls die Möglichkeit, einen Teil der gereinigten Plasmapyrolysegase einer direkten stofflichen Verwertung in einem anderen (chemischen) Prozeß zuzuführen.

Eine weitere vorteilhafte Variante des erfindungsgemäßen Verfahrens besteht darin, dem Plasmapyrolysereaktor das erwärmte, teilweise plastifizierte und thermisch inerte Einschlüsse enthaltende Polymergemisch mittels Extrusion zuzuführen und zuzudosieren. Dadurch wird bereits eine Vorwärmung, einschließlich chemisch-physikalischer Voraufschluß, des Polymerabfallgemisches erreicht und es erfolgt eine gleichmäßige, problemarme Dosierung des Abfallgemisches auch bei schwieriger physikalischer Konsistenz.

Das erfindungsgemäße Verfahren weist folgende grundsätzliche Vorteile auf:
1. Vollständige Umsetzung des Kunststoffmülls bzw. beliebiger organischer Substanz in ein heizwertreiches Gas durch hohe unspezifische Reaktivität innerhalb der Umsetzung in der Plasmastufe.
2. Ausnutzung der thermischen Enthalpie des die Plasmastufe verlassenden Plasmapyrolysegases auf hohem exergetischem Niveau (Hochdruckdampferzeugung).
3. Der Einsatz des heizwertreichen Gases in der Gasturbine läßt hohe exergetische Wirkungsgrade zu.
4. Der hohe Energieinhalt des eingesetzten Kunststoffmülls kann zusätzlich mit hohem Wirkungsgrad verstromt werden.
5. Mit Hilfe des erfindungsgemäßen Verfahrens kann auch PVC verstromt und entsorgt werden.
6. Der Kunststoffmüll kann umweltgerecht entsorgt werden; es besteht keine Gefahr der Dioxin- und Furanbildung bzw. der Stickoxidbildung an irgendeiner Stelle des Prozesses.
7. Die in der Plasmastufe eingesetzte Elektroenergie kann zu einem hohen Anteil ebenfalls als Strom zurückgewonnen werden. Die gewonnene Strommenge aus dem Verfahren übersteigt wesentlich die in der Plasmapyrolysestufe eingesetzte Elektroenergie.
8. Der Prozeß gestattet eine wesentlich wirtschaftlichere Entsorgung von Kunststoffmüll als bekannte Verfahren.
9. Überproportionale Einsparung fossiler Rohstoffe (Öl, Kohle, Gas) zur Stromerzeugung in Relation zu konventionellen Kondensationskraftwerksprozessen, so daß eine stoffliche Nutzung dieser eingesparten Ressourcen ermöglicht wird.

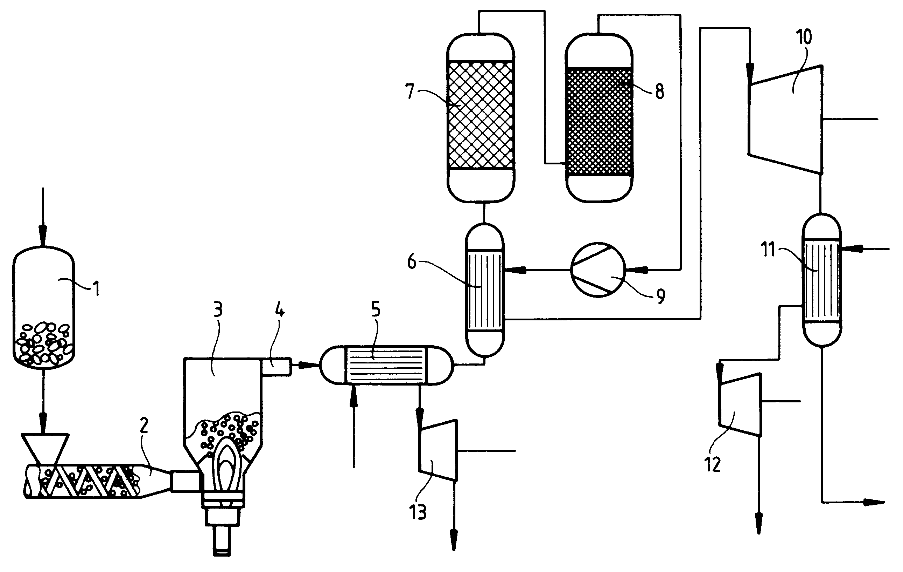

Das erfindungsgemäße Verfahren ist in einer speziellen Ausführungsform, d.h. der zweckmäßigsten Realisierungsform, als Grobschaltbild in Fig. 1 dargestellt und soll anhand dieser Darstellung erläutert werden:

Die Einsatzprodukte für das erfindungsgemäße Kunststoffmüll-Verstromungsverfahren (ungereinigte und unsortierte Kunststoffe beliebiger Zusammensetzung) werden zunächst in einer Shredderstufe auf ein bestimmtes Rastermaß zerkleinert und anschließend nach einer Zwischenlagerung 1 einer Arbeitsschnecke 2 zugeführt, in welcher das Polymermaterial weiter zerkleinert, aufgeschmolzen und komprimiert wird und in Form eines oder mehrerer Stränge einem Plasmapyrolysereaktor 3 zugeführt wird, wo der Kunststoffmüll einem plasmachemisch-pyrolytisch-vergasenden Abbau in einem elektrisch generierten Plasmastrahl in einer reduzierenden Atmosphäre bei unterstöchiometrischem Sauerstoffgehalt des Systems (Wasserstoff, Wasserdampf, CO etc.) bei Temperaturen oberhalb von 1500 K in an sich bekannter Weise unterzogen wird. Ein hierfür geeigneter Plasmareaktor wird z.B. in der Patentschrift DD 298 459 beschrieben, Anschließend wird das heiße Plasmapyrolysegas ebenfalls in an sich bekannter Weise in einer Quenchstufe 4 abgekühlt, um Kohlenwasserstoffe zu stabilisieren, und nach vorheriger Gasreinigung einem kombiniertem Gas- und Dampfturbinenprozeß (GuD-Prozeß) zugeführt, Die Gasreinigungsstufe schließt sich an die Abhitzestufe 5 zur Dampferzeugung und den Gaskühler 6 an, der dazu dient, das Plasmapyrolysegas vor der Gasreinigung abzukühlen und nach Verlassen der Gasreinigungsstufe wieder aufzuheizen. Die Gasreinigung besteht im wesentlichen aus einer sauren Absorptionsstufe 7 und einer basischen Absorptionsstufe 8 und dient der Entfernung insbesondere von Schwermetallen in Form von löslichen Verbindungen und HCl, HF, HCN und H₂S aus dem Plasmapyrolysegas, Je nach Zusammensetzung der Plasmapyrolysegase können auch andere Komponenten für die Gasreinigung eingesetzt werden (z.B. eine Adsorptionsstufe). Nach Verlassen der Gasreinigung wird das Plasmapyrolysegas in der Kompressionsstufe 9 auf einen Druck >10 bar gebracht und zur Wiederaufheizung auf mittlere Temperaturen dem Wärmeübertrager 6 zugeführt. Anschließend wird das Plasmapyrolysegas in einer Gasturbine 10 zur Stromerzeugung eingesetzt, deren Abgase in einem weiteren Abhitzeerzeuger 11 zur Dampferzeugung genutzt werden können. Der so erzeugte Dampf wird anschließend in einer Dampfturbine 12 weiter verstromt. Unter Dampfturbine bzw. Gasturbine sei hier die Kopplung von jeweils einer Gas- bzw. Dampfturbine mit einem Generator verstanden.

Die zu recycelnden Polymerabfälle liegen in unterschiedlicher räumlicher Beschaffenheit vor, wenn sie aus dem Nutzungsprozeß ausgeschleust werden. In der Praxis muß eine Aussortierung vorgeschaltet werden, wenn Kunststoffabfälle in Form von Verbundwerkstoffen vorliegen, d.h. größere Metallmengen im Recyclat sollten aus maschinentechnischen Gründen vermieden werden. In einer Shredderanlage werden die Kunststoffabfälle zunächst so zerkleinert, daß ein solches Rastermaß der Individualteile entsteht, daß die Arbeitsschnecke 2 jedes Individualkunststoffteil übernehmen kann. In der Arbeitsschnecke 2 werden die Kunststoffteile weiter aufgebrochen und zerkleinert, z.T. plastifiziert (durch äußere Beheizung oder den mechanischen Energieeintrag) und der Kunststoffmüll wird in Form eines Stranges mit nichtplastifizierbaren Einschlüssen in den Plasmapyrolysereaktor 3 gefördert. Dabei ist die Zugabe von Dampf in die Arbeitsschnecke 2 dem Aufschluß des Kunststoffmülls förderlich; sie kann aber auch in dem nachfolgenden Plasmapyrolysereaktor 3 erfolgen.

Während des Plasmapyrolyseprozesses im Plasmapyrolysereaktor 3, wo der gesamte Kunststoff mit hoher Reaktivität und großer Reaktionsgeschwindigkeit durch einen reduzierenden Plasmastrahl hoher Temperatur (oberhalb von 1500°C) unter unterstöchiometrischer Anwesenheit von Sauerstoff vollständig abgebaut und in höherwertige Kohlenwasserstoffe, wie Azetylen, Ethylen als auch Wasserstoff und CO (d.h. in ein heizwertreiches Gas) umgesetzt wird, wird unter Einsatz von elektrischer Energie (Strom = Exergie) der ursprünglich bei niedriger Temperatur vorliegende Heizwert des Kunststoffes auf ein qualitativ höheres exergetisches Niveau gehoben (Plasmapyrolysegas mit hohem Heizwert). Bei der erfindungsgemäßen Überführung der Plasmapyrolysegase in eine Gas-/Dampfturbinenkombination (GuD-Prozeß) lassen sich hohe exergetische Wirkungsgrade erreichen, wodurch die im Gesamtprozeß gewonnene Strommenge die dem Plasmapyrolysereaktor 3 zugeführte um einen beträchtlichen Betrag (etwa um das 2- bis 2,5-fache) übersteigt, woraus der hauptsächliche wirtschaftliche Nutzen des Prozesses resultiert. Einerseits wird erreicht, daß Kunststoffmüllprodukte in beliebiger Zusammensetzung vollständig abgebaut werden können, während andererseits - im Prinzip ähnlich der Wirkung eines Wärmetransformators - durch den Einsatz hochwertiger Energie (Strom) der hohe Energieinhalt des Kunststoffmülls auf ein wesentlich höheres exergetisches Niveau gehoben wird, und damit ein großer Teil dieses Energieinhaltes in Form hochwertiger Exergie gewonnen werden kann. Auch die für den Betrieb des Plasmapyrolysereaktors 3 bereitzustellende Elektroenergie, die energetisch in das Plasmapyrolysegas einfließt (in Form von thermischer und chemischer Enthalpie), befindet sich nach dem Plasmapyrolyseprozeß ebenfalls (mit dem Plasmapyrolysegas) auf einem hohen exergetischen Niveau, so daß ein beträchtlicher Teil davon in Form reiner Exergie (Strom) zurückgewonnen werden kann. Die Gewähr für die effektive Nutzung des so bereitgestellten hohen Exergiepotentials liefert der nachgeschaltete Gas- und Dampfturbinenprozeß 9, 10, 11, 12, bestehend aus den Teilprozessen Kompression 9 des Plasmapyrolysegases zum Einsatz in der Gasturbine, Wiederaufheizung des Plasmapyrolysegases im Plasmapyrolysegaskühler 6, Gasturbine 10, Abhitzekessel 11 und Dampfturbine 12, Die erfindungsgemäß vorgeschlagene Kopplung zwischen einem Plasmapyrolyse- und einem GuD-Prozeß stellt ein nahezu ideales Verfahren zur Lösung der hier zugrundeliegenden Aufgabe dar:
Es wird eine umweltgerechte und rückstandlose Verstromung von Kunststoffmüll erreicht und damit aus einem unerwünschten, gefahrenbehafteten und zu entsorgenden Abfallprodukt eine hochwertige Energie mit hohem exergetischen Wirkungsgrad (ca. 50 %, bezogen auf den Kunststoffmüllheizwert + Strom für den Plasmapyrolysereaktor 3) erzeugt. Zwischen dem Plasmapyrolysereaktor 3 und der Kompressionsstufe 9 für den GuD-Prozeß befinden sich die Stufen Plasmapyrolysegasquenchung 4, Abhitzekessel 5, Plasmapyrolysegaskühler 6 sowie die Gasreinigungsstufen 7 und 8. In der Plasmapyrolysegasquenchung 4 werden z.B. durch Eindüsen von kaltem Kreislaufgas die Kohlenwasserstoffe C₂H₂ und C₂H₄ aus dem Plasmapyrolysereaktor stabilisiert und das Plasmapyrolysegas im nachfolgenden Abhitzekessel 5 abgekühlt und zur Dampferzeugung benutzt. Der Pyrolysegaskühler 6 dient der Abkühlung des Plasmapyrolysegases für die nachgeschaltete Gasreinigung auf Temperaturen unter 100°C und gleichzeitig der Wiederaufheizung des Plasmapyrolysegases auf nahezu Abhitzekessel-Austrittstemperatur von mindestens 200°C. Die Gasreinigungsstufen 7 und 8 dienen der Entfernung von H₂S, HCl, HCN, HF auf absorptivem Wege bzw. der Entfernung von Schwermetallen auf adsorptivem Wege.

Die Gasreinigung stellt eine bekannte, nicht erfindungsrelevante Stufe dar und kann deshalb auf unterschiedlichen Wegen erfolgen (siehe z.B. Fritz/Kern, "Reinigung von Abgasen", Vogel-Verlag, Würzburg, 2. Aufl. 1990). Die Gasströmung in der Anlage wird einerseits durch die Zugabe des Plasmagases in den Plasmapyrolysereaktor 3 unter Druck erreicht, andererseits durch den Betrieb der Kompressionsstufe 9 realisiert.

Zweckmäßig ist es, im Anschluß an den Plasmapyrolysereaktor 3 einen MHD-Generator zu installieren, über welchen eine weitere Erhöhung der Stromausbeute durch bessere Nutzung des exergetischen Potentials des Plasmapyrolysegases möglich wird.

Das erfindungsgemäße Verfahren läßt weiterhin die Möglichkeit offen, durch Auskopplung eines Teiles des Plasmapyrolysegases vor oder nach der Kompressionsstufe 9 einen Teil des Plasmapyrolysegases unmittelbar stofflich zu nutzen. Diese Möglichkeit ergibt sich aus wirtschaftlichen Erwägungen heraus.

### Beispiel

Anhand eines Beispieles soll das erfindungsgemäße Verfahren in seiner Wirkungsweise erläutert werden:
Ein Kunststoffabfallgemisch, bestehend aus 50 % Polyethylen/Polypropylen, 20 % Polyurethan, 10 % Polycarbonate, 10 % PVC und 10 % Polyacrilnitril/Polystyrol, wird in einer Zerkleinerungsanlage auf ein für die nachfolgende Förderschnecke 2 geeignetes Rastermaß von 0,1 m x 0,1 m x 0,1 m (kubisch) zerkleinert und (nach einer Zwischenlagerung 1) in die Förderschnecke 2 eingeführt, dort unter Dampfzugabe plastifiziert und breiförmig in den Plasmapyrolysereaktor 3 eingeführt. Mittels eines Wasserstoffplasmastrahles mit einer mittleren Massentemperatur von 3000°C wird das Polymerengemisch (Heizwert ca. 40000 kJ/kg) vollständig bezüglich der organischen Inhaltsstoffe in ein heizwertreiches Plasmapyrolysegas folgender Zusammensetzung umgesetzt und damit auf ein hohes exergetisches Niveau überführt:

| | |
|---|---|
| Azetylen | 30,6 Ma-% |
| Ethylen | 25,6 Ma-% |
| H₂ | 6,2 Ma-% |
| CO | 21,0 Ma-% |
| Methan | 5,5 Ma-% |
| HCl, H₂S, N₂ | 10,0 Ma-% |
| HCN | 0,5 Ma-% |
| (Ma-% = Mol-%) | |

Der Heizwert des Plasmapyrolysegases beträgt etwa 37000 kJ/m³, die Temperatur am Reaktoraustritt etwa 2500°C. Zur Stabilisierung der Kohlenwasserstoffe wird das Plasmapyrolysegas in der Quencheinrichtung 4 mit kaltem Plasmapyrolysegas auf eine Temperatur von 1000°C gequencht und im nachfolgenden Abhitzekessel 5 zur Dampferzeugung eingesetzt. Der gewonnene Dampf kann dann in einer Dampfturbine 13 genutzt werden. Im Pyrolysegaskühler 6 wird das Plasmapyrolysegas von der Austrittstemperatur des Abhitzekessels 5 auf eine Temperatur <100°C im Gegenstrom mit kaltem Plasmapyrolysegas gekühlt und in einer gekoppelten sauren und basischen Absorptionsstufe 7 von HCl (saure Stufe), sowie H₂S und HCN und Restspuren von HCl (basische Absorptionsstufe) befreit. In der nachfolgenden Adsorptionsstufe 8 werden Schwermetalle aus dem Plasmapyrolysegas entfernt. Die Salzsäure aus der sauren Waschstufe 7 wird einer Elektrolyse zugeführt. Nach der Kompression des gereinigten Plasmapyrolysegases auf einen Druck von 24 bar (Kompressor 9) wird das Plasmapyrolysegas wieder in den Pyrolysegaskühler 6 geführt und dort aufgeheizt. Anschließend wird das gereinigte heiße Plasmapyrolysegas einer Gasturbine 10 zugeführt und mit hohem exergetischen Wirkungsgrad in Strom umgewandelt. Die heißen Abgase der Gasturbine werden einem weiteren Abhitzekessel 11 zugeführt und dort zur Dampferzeugung genutzt. Der erzeugte Dampf wird in einer Gegendruckturbine 12 entspannt und unter Nutzung der Wärme-Kraft-Kopplung in Niederdruckdampf für Heizzwecke umgewandelt.

Die exergetische Bilanz des erläuterten Beispiels weist aus, daß der Heizwert des Kunststoffes im Plasmapyrolysereaktor 3 auf ein so hohes exergetisches Niveau gebracht worden ist, daß etwa 40 % davon verstromt werden können und als Exergie zur Verfügung stehen, Dieser Wert entsteht unter Eliminierung der Aufwendungen an Strom für den Plasmapyrolysereaktor. Der aufgewendete Strom für den Plasmapyrolysereaktor findet sich ebenfalls wieder in der thermischen und chemischen Enthalpie des Plasmapyrolysegases, welches stets ein hohes exergetisches Niveau besitzt, so daß dieser Energieanteil ebenfalls mit hohem Wirkungsgrad als Strom zurückgewonnen werden kann.

Eine effiziente Möglichkeit zur Erhöhung der Stromausbeute besteht in der Nachschaltung eines MHD-Generators im Anschluß an den Plasmapyrolysereaktor 3.

## Patentansprüche

1. Verfahren zur Verstromung von Kunststoffabfällen beliebiger Zusammensetzung, bei dem die Kunststoffabfälle in einem Plasmareaktor bei reduzierenden Bedingungen in einem unterstöchiometrisch Sauerstoff enthaltenden Plasma bei Temperaturen oberhalb von 1200°C zu einem aus niedermolekularen Kohlenstoff-Fragmenten bestehenden Plasmapyrolysegas umgesetzt werden, das anschließend auf Temperaturen unterhalb 1500°C abgekühlt wird, dadurch gekennzeichnet, daß das Plasmapyrolysegas in komprimierter Form als Brennstoff mit hohem Heizwert und hoher Temperatur einer Gasturbine zur Stromerzeugung zugeführt wird, deren Abwärme zur Erzeugung von Dampf ausgenutzt wird, der in eine ebenfalls stromerzeugende Dampfturbine eingespeist wird.

2. Verfahren nach Anspruch 1, dadurch gekennzeichnet, daß das Plasmapyrolysegas vor dem Eintritt in die Gasturbine abgekühlt wird, von Schwermetallen und sauren Bestandteilen gereinigt, auf einen Druck oberhalb von 10 bar komprimiert und anschließend wieder nahezu auf die Ursprungstemperatur aufgeheizt wird.

3. Verfahren nach Ansprüchen 1 und 2, dadurch gekennzeichnet, daß das heiße Plasmapyrolysegas zur direkten Stromgewinnung durch einen magnetohydrodynamischen Generator geleitet und anschließend der Gasturbine zugeführt wird.

4. Verfahren nach Ansprüchen 1 bis 3, dadurch gekennzeichnet, daß die Kunststoffabfälle aufgeschmolzen werden und in flüssiger oder pastöser Form kontinuierlich in den Plasmareaktor eindosiert werden.

5. Verfahren nach Ansprüchen 1 bis 4, dadurch gekennzeichnet, daß ein Teil der Kohlenwasserstoffe im Plasmapyrolysegas als Rohprodukt oder Vorprodukt für einen chemischen Prozeß ausgeschleust wird.
